(19) Europäisches Patentamt
European Patent Office
Office européen des brevets

(11) EP 4 079 780 A1

(12) EUROPEAN PATENT APPLICATION

(43) Date of publication:
**26.10.2022 Bulletin 2022/43**

(21) Application number: **21169719.8**

(22) Date of filing: **21.04.2021**

(51) International Patent Classification (IPC):
***C08G 18/48*** *(2006.01)* ***C08G 18/72*** *(2006.01)*
***C08G 18/75*** *(2006.01)* ***C08G 18/76*** *(2006.01)*
***C08G 18/79*** *(2006.01)* ***C08G 18/10*** *(2006.01)*
***C09K 3/10*** *(2006.01)* ***E04H 4/14*** *(2006.01)*
***C08L 101/10*** *(2006.01)* ***C04B 41/52*** *(2006.01)*

(52) Cooperative Patent Classification (CPC):
(C-Sets available)
**C08G 18/7664; C03C 17/322; C04B 41/009; C04B 41/52; C04B 41/63; C04B 41/64; C04B 41/71; C08G 18/10; C08G 18/4825; C08G 18/725; C08G 18/755; C08G 18/792; E04H 4/14;** C08G 2190/00 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sika Technology AG**
**6340 Baar (CH)**

(72) Inventors:
- **ALVES DOS SANTOS, Flaviane**
**Hoboken, NJ 07030 (US)**
- **KNEPPER, Jeffrey**
**New Jersey, NJ 08876 (US)**
- **BORONG, Marie**
**Red Bank, NJ 07701 (US)**

(74) Representative: **Sika Patent Attorneys**
**c/o Sika Technology AG**
**Corp. IP Dept.**
**Tüffenwies 16**
**Postfach**
**8048 Zürich (CH)**

# (54) SEALANT SYSTEM FOR CHLORINATED WATER POOLS

(57) The invention is directed to a method for adhesively sealing a joint or a surface in or on a building structure that is in contact with chlorinated water, comprising the steps:
a) applying a primer composition **P** onto the surface or into the joint to be sealed;
b) waiting for primer composition **P** to be cured;
c) applying a moisture-curable sealant composition **S** onto the cured primer composition **P,** thus sealing the joint or the surface; and
d) curing the moisture-curable sealant composition **S** by means of moisture; wherein
said primer composition **P** comprises:
- at least one polyol and at least one polyisocyanate, or a polyurethane reaction product thereof,
- preferably at least one organosilane having hydrolysable alkoxysilane groups and having at least one functional group selected from glycidoxyalkyl, isocyanatoalkyl, aminoalkyl, or mercaptoalkyl groups,
- preferably at least one polyurethane curing catalyst,
- at least one organic solvent;
and wherein
said moisture-curable sealant composition **S** comprises:
- between 10 and 60 wt.-%, based on the total composition **S,** of at least one organic polymer having hydrolysable silane groups,
- optionally up to 30 wt.-%, based on the total composition, of at least one plasticizer,
- optionally between 0.1 and 5 wt.-%, based on the total composition, of at least one monomeric or oligomeric amino-functional alkoxysilane,
- at least one silane curing catalyst.

The method yields a sealed joint or surface that retains adhesion and resists degradation when in contact with chlorinated water, such as in swimming pools.



Processed by Luminess, 75001 PARIS (FR)

(Cont. next page)

(52) Cooperative Patent Classification (CPC): (Cont.)

C-Sets
**C04B 41/009, C04B 28/02;**
**C04B 41/009, C04B 33/00;**
**C04B 41/52, C04B 41/4884;**
**C04B 41/52, C04B 41/4884, C04B 41/4944,**
**C04B 41/4955;**
**C08G 18/10, C08G 18/289**

## Description

### Technical field

The invention relates to a method for adhesively sealing a joint or a surface in or on a building structure that is in contact with chlorinated water, and a kit-of-parts for adhesively sealing a joint or a surface in or on a building structure that is in contact with chlorinated water.

### Background of the invention

Reactive, curable sealant materials have been used for a long time for adhesively sealing joints or surfaces in or on building structures. Such sealants cure, often by atmospheric moisture via their intrinsic cross-linking mechanisms, into elastic, rather soft materials that are capable to withstand thermal substrate expansions and contractions and maintain an adhesion on these substrates.
They are often based on reactive polyurethanes, silicones, polysulfides, or organic polymers having reacting silane groups, also called silane-terminated polymers (STP). Each of these materials has different advantages compared to the others. In recent years, in particular STP materials have been increasingly used, since they tend to have a beneficial EHS rating and often have excellent adhesion properties on various substrates.
Depending on the building structure where the joint or surface to be sealed is located, there are different requirements for the sealant to be used. One particularly demanding application are expansion and control joints in pool decks, pool wall to deck transitions, and pools. First of all, the joint is often in direct contact with water, which by itself is a demanding condition for a sealant. Additionally, for sanitary reasons, levels of bacteria and viruses in swimming pool water must be kept low to prevent the spread of diseases and pathogens. Bacteria, protozoans, algae, and insect larvae can enter the pool if water is not properly sanitized. Swimming pools thus normally contain chemical disinfectants, such as oxidative chlorine (usually as a hypochlorite salt, such as calcium hypochlorite) and/or bromine- and chlorine-releasing compounds such as N-bromo-N’-chloro-5,5-dimethylhydantoin, which are effective in reducing pathogen levels to acceptably low values. Such chemical additives are however oxidizing and chemically reactive, and they put a severe strain on the joint sealant material. Known common sealant materials quickly lose adhesion under influence of chlorinated water and in some cases complete degradation of the sealant is observable after a short time.
There are only a few suitable sealant materials currently known that are able to perform this task. Silicones are used in sanitary applications and some of them can also be used in pool sealing applications. However, silicones intrinsically have relatively poor adhesion properties and are almost impossible to overpaint. Furthermore, they tend to irreversibly stain porous stone substrates.
The second often used class of sealant materials are polysulfides. They have an excellent oxidation stability and are chemically well suited for the harsh environment around swimming pools. However, they have the problem of having a dominant intrinsic color due to their crosslinking agents and thus are often only available in dark, brownish, or tan colors, which is undesirable for many customers due to esthetic reasons, but also may lead to unpleasant discolorations around the joints.
Polyurethanes normally are not able to withstand the chemical milieu of chlorinated pool water and tend to degrade quickly. Recently, compositions based on MS-Polymers, a sub-class of silane-terminated polymers (STP), have been increasingly used for swimming pool sealing applications. They do not tend to discoloration but have limits regarding adhesion properties when in direct contact with the swimming pool water. Especially on demanding substrates such as concrete, adhesion failure is still commonly visible when using such MS-Polymer-based sealants.
Thus, there is a demand for a method for adhesively sealing a joint or a surface in or on a building structure that is in contact with chlorinated that overcomes the limitations of the state of the art.

### Summary of the invention

The object of the present invention is to provide a method for adhesively sealing a joint or a surface in or on a building structure that is in contact with chlorinated water by means of an environmentally friendly adhesive composition that does not lead to adhesion loss on demanding substrates such as concrete, discoloration, deterioration or even full decomposition of the adhesion or the sealant itself under influence of highly chlorinated water, and that can be formulated in white color or may be colored to many specific aesthetic needs, and that can be overpainted and that does not stain the substrate.

It was surprisingly found that by using a primer composition comprising at least one polyol and at least one polyisocyanate, or a polyurethane reaction product thereof, preferably at least one organosilane having hydrolysable alkoxysilane groups and having at least one functional group selected from epoxyalkyl, aminoalkyl, isocyanatoalkyl, or mercaptoalkyl groups, preferably at least one polyurethane curing catalyst, and at least one organic solvent in combination

with a moisture-curable sealant composition, comprising between 10 and 60 wt.-% of at least one organic polymer having hydrolysable silane groups, optionally up to 30 wt.-% of at least one plasticizer, optionally between 0.1 and 5 wt.-% of at least one monomeric or oligomeric amino-functional alkoxysilane, and at least one silane curing catalyst in a method for adhesively sealing a joint or a surface in or on a building structure that is in contact with chlorinated water, a cured sealing material is obtained that shows a surprisingly high resistance against degradation and adhesion loss normally observed in sealants that are in contact with chlorinated water.

The subject of the present invention is a method as defined in claim 1.

One of the advantages of the method is that the method according to the present invention is that a broad range of white or colored sealants can be used that, unlike polysulfide sealants, do not lead to changes of pH in the water or unpleasant discolorations.

Furthermore, the present method yields a joint or surface seal with unprecedented sealant and adhesion stability, even under prolonged or permanent influence of highly chlorinated water.

Other aspects of the present invention are presented in other independent claims. Preferred aspects of the invention are presented in the dependent claims.

## Detailed description of the invention

The subject of the present invention is a method for adhesively sealing a joint or a surface in or on a building structure that is in contact with chlorinated water, comprising the steps:

a) applying a primer composition **P** onto the surface or into the joint to be sealed;
b) waiting for primer composition **P** to be cured;
c) applying a moisture-curable sealant composition **S** onto the cured primer composition **P,** thus sealing the joint or the surface; and
d) curing the moisture-curable sealant composition **S** by means of moisture;
wherein
said primer composition **P** comprises:

- at least one polyol and at least one polyisocyanate, or a polyurethane reaction product thereof,
- preferably at least one organosilane having hydrolysable alkoxysilane groups and having at least one functional group selected from glycidoxyalkyl, aminoalkyl, isocyanatoalkyl, or mercaptoalkyl groups,
- preferably at least one polyurethane curing catalyst,
- at least one organic solvent;

and wherein
said moisture-curable sealant composition **S** comprises:

- between 10 and 60 wt.-%, based on the total composition **S,** of at least one organic polymer having hydrolysable silane groups,
- optionally up to 30 wt.-%, based on the total composition, of at least one plasticizer,
- optionally between 0.1 and 5 wt.-%, based on the total composition, of at least one monomeric or oligomeric amino-functional alkoxysilane,
- at least one silane curing catalyst.

In the present document, the term "silane group" refers to a silyl group which is bonded to an organic radical or to an organosiloxane radical and has one to three, especially two or three, hydrolysable substituents on the silicon atom. Particularly useful hydrolysable substituents are alkoxy radicals. These silane groups are also referred to as "alkoxysilane groups". Silane groups may also be in partly or fully hydrolyzed form, for example as silanols.
"Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.
"Aminofunctional compound" refers to a compound which contains an amino group.
"Primary amino group" and "primary amine nitrogen" refer respectively to an $NH_2$ group and the nitrogen atom thereof that is bonded to an organic radical, and "secondary amino group" and "secondary amine nitrogen" refer respectively to an NH group and the nitrogen atom thereof that is bonded to two organic radicals which may also together be part of a ring, and "tertiary amino group" and "tertiary amine nitrogen" refer respectively to an N group and to the nitrogen atom thereof that is bonded to three organic radicals, two or three of which together may also be part of one or more rings. Accordingly, "primary aminosilanes" are aminosilanes comprising a primary amino group and "secondary aminosilanes" are aminosilanes comprising a secondary amino group. The latter also encompasses compounds having both a primary

and a secondary amino group.

"Polyoxyalkylene radical" refers to a linear hydrocarbyl radical which contains ether groups and contains more than two repeat units of the (O-R) type in succession, where R is an alkylene radical, as for example from the polyaddition of ethylene oxide or 1,2-propylene oxide onto starter molecules having two active hydrogen atoms.

Substance names beginning with "poly", such as polyol, polyether, or polyisocyanate, refer to substances containing, in a formal sense, two or more of the functional groups that occur in their name per molecule.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "polyether containing silane groups" also encompasses organic polymers which contain silane groups and which, in addition to polyether units, may also contain urethane groups, urea groups or thiourethane groups. Such polyethers containing silane groups may also be referred to as "polyurethanes containing silane groups".

"Molecular weight" is understood in the present document to mean the molar mass (in grams per mole) of a molecule or part of a molecule, also referred to as "radical". "Average molecular weight" is understood to mean the number-average $M_n$ of an oligomeric or polymeric mixture of molecules or radicals, which is typically determined by means of gel permeation chromatography (GPC) against polystyrene as standard.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

"Room temperature" refers to a temperature of about 23°C.

A dotted line in the formulae in this document in each case represents the bond between a substituent and the corresponding molecular radical.

Nitrogen content of an aminofunctional alkoxysilane can be measured by the Kjeldahl method or the Dumas method, both which are known to the skilled person in the field of analytical chemistry.

The term "crosslinked" designates a polymer matrix, in which the polymer chains are inter-connected by a plurality of covalent bonds that are stable mechanically and thermally. Other possible forms of crosslinked polymers such as physically crosslinked polymers are not regarded as "crosslinked" in the context of the present disclosure. The terms "cured" and "vulcanized" may be used interchangeably with the term "crosslinked".

The method according to the present invention is a method for adhesively sealing a joint or a surface in or on a building structure that is in contact with chlorinated water.

The term "chlorinated water" herein is understood as water that contains at least 1 ppm of free hypochlorite and/or hypochlorous acid. It is possible that such chlorinated water furthermore contains other oxidizing and/or non-oxidizing chlorine species, and/or other halogens, such as bromine (usually as BCDMH - N-bromo-N'-chloro-5,5-dimethylhydantoin in combination with DCDMH - N,N'-dicholoro-5,5-dimethyl-imidazolidine-2,4-dione or DCEMH - N,N'-dicholoro-5-ethyl-5-methylhydantoin), or iodine, and/or UV stabilizers such as cyanuric acid, and/or further oxidizing agents such as ozone.

Commonly, chlorinated water as used in swimming pools contains at least 20 ppm of hypochlorite and/or hypochlorous acid, while the equilibrium concentration of hypochlorite and hypochlorous acid, respectively, depends on the pH of the chlorinated water.

Suitable substrates that can be adhesively sealed using the method according to the present invention include:

- glass, glass ceramic, enamel, concrete, mortar, brick, tile, gypsum and natural rocks such as limestone, granite or marble;
- metals and alloys such as aluminum, iron, steel and nonferrous metals, and also surface-finished metals and alloys such as galvanized or chromed metals or surface coated metals, such as Kynar®- or Duranar®-coated alumium;
- leather, textiles, paper, wood, woodbase materials bonded with resins, for example phenolic, melamine or epoxy resins, resin-textile composites and further polymer composites;
- plastics such as polyvinyl chloride (rigid and flexible PVC), acrylonitrile-butadiene-styrene copolymers (ABS), polycarbonate (PC), polyamide (PA), polyesters, poly(methyl methacrylate) (PMMA), epoxy resins, polyurethanes (PUR), polyoxymethylene (POM), ethylene/propylene/diene terpolymers (EPDM), and also fiber-reinforced plastics such as carbon fiber-reinforced plastics (CFP), glass fiber-reinforced plastics (GFP) and sheet molding compounds (SMC), where the plastics may have been surface-treated by means of plasma, corona or flames;
- coated substrates such as powder-coated metals or alloys;
- paints or varnishes, especially automotive topcoats;
- bituminous substrates such as bitumen, PE laminates with bituminous backside.

The substrate to be adhesively sealed by the method according to the present invention is preferably selected from the list consisting of: glass, glass ceramic, concrete, mortar, brick, tile, gypsum, natural stone, metals and alloys, textiles, wood, wood-resin composites, resin-textile composites, resin-glass- or carbon-fiber composites, polyvinyl chloride (PVC), acrylonitrile-butadiene-styrene copolymers (ABS), polycarbonate (PC), polyamide (PA), polyesters, poly(methyl methacrylate) (PMMA), epoxy resins, paints, varnishes, coated substrates, and bitumen.

If required, the substrates to be sealed by the method according to the present invention can be pretreated prior to the application of the primer composition **P** and subsequently the sealant composition **S**, especially by chemical and/or physical cleaning methods, such as sanding, de-greasing, wiping, or brushing. In general, it is not required to pre-treat the surfaces prior to application of the composition, in particular not by chemically reactive methods. The primer composition **P** shows an excellent adhesion profile on a large variety of unprimed, non-pretreated, and even uncleaned materials.

However, it may be advantageous to de-grease, clean, or brush the substrates before applying the primer composition **P**. This is normally only required when the substrates are visibly dirty or layered with dust, but may be advantageous in any case, e.g. to remove process oils or other surface contaminants. It may be advantageous to use an alcohol or mild solvent to de-grease the surfaces after mechanical removal of any particulate matter possibly present. With some substrates, mechanical roughening, e.g., by using a metal brush, may be advantageous, in particular when the surface is extremely smooth.

Moisture-curable sealant composition **S**

The moisture-curable sealant composition **S** to be used in the method according to the present invention comprises:

- between 10 and 60 wt.-%, based on the total composition **S,** of at least one organic polymer having hydrolysable silane groups,
- optionally up to 30 wt.-%, based on the total composition, of at least one plasticizer,
- optionally between 0.1 and 5 wt.-%, based on the total composition, of at least one monomeric or oligomeric aminofunctional alkoxysilane,
- at least one silane curing catalyst.

The moisture-curable sealant composition **S** preferably comprises between 0.1 and 5 wt.-%, based on the total composition, of at least one monomeric or oligomeric aminofunctional alkoxysilane.
More preferably, composition **S** comprises between 0.2 and 2.5 wt.-%, based on the total composition, of the monomeric or oligomeric aminofunctional alkoxysilane.

In preferred embodiments, the at least one monomeric or oligomeric aminofunctional alkoxysilane has a nitrogen content of between 4.5 and 14.5 wt.-%, preferably between 5 and 10 wt.-% based on the total weight of the alkoxysilane.

In the same or other preferred embodiments containing an oligomeric aminofunctional aminofunctional alkoxysilane, the at least one oligomeric aminofunctional alkoxysilane preferably has a nitrogen content of between 15 and 20 wt.-%, based on the total weight of the oligomeric aloxysilane. One advantage of the high nitrogen content, especially of the oligomeric aminofunctional alkoxysilane, is a faster adhesion build-up after application of the adhesive composition.

Aminofunctional alkoxysilanes suitable for sealant composition **S** may be monomeric or oligomeric. The oligomeric forms are linear, branched, or cyclic oligomers, formed by the partial hydrolysis and condensation of monomeric aminofunctional alkoxysilanes, and, in some embodiments, partially with other, not aminofunctional alkoxysilanes, such as alkyl alkoxysilanes or tetraalkoxysilanes.

One advantage of using oligomeric alkoxysilanes is that lower VOC levels can be achieved when employing them in greater amounts compared to purely monomeric silanes.

Monomeric aminofunctional alkoxysilanes that are suitable for sealant **S** in the method according to the present invention are shown in formula (I),

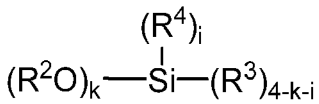

(I)

where

$R^2$ is a monovalent alkyl radical having 1 to 6 carbon atoms, preferably 1 or 2 carbon atoms, most preferably a methyl radical;

$R^3$ is a monovalent aminoalkyl radical selected from $-C_pH_{2p}-NH_2$, $-C_pH_{2p}-NH-R^5$, $-C_pH_{2p}-NH-C_dH_{2d}-NH_2$, $-C_pH_{2p}-NH-C_dH_{2d}-NH-C_eH_{2e}-NH_2$, $-C_pH_{2p}-NH-C_dH_{2d}-NH-R^5$, and $-C_pH_{2p}-NH-C_dH_{2d}-NH-C_eH_{2e}-NH-R^5$;
$R^4$ is is a monovalent linear, branched, or cyclic alkyl or arakyl radical having 1 to 12 carbon atoms, preferably 1 to 8 carbon atoms, most preferably a methyl radical; $R^5$ is a monovalent linear, branched, or cyclic alkyl or arakyl radical having 1 to 12 carbon atoms, preferably 1 to 6 carbon atoms;
index i is an integer with a value of 0 or 1, preferably 0;
index k is an integer with a value of 2 or 3, with the provisio that if i = 1 then k = 2;
index p is an integer with a value of 1 to 6;
indices d and e are independently integers with a value of 2 to 6.

Suitable oligomeric aminofunctional alkoxysilanes are shown in formula (II) and (III), where formula (II) shows linear oligomers and formula (III) shows cyclic oligomers. It is possible to also use branched oligomers, at least in portions of a mixture of oligomers.

Suitable linear oligomers for use as oligomeric aminofunctional alkoxysilanes are shown in formula (II),

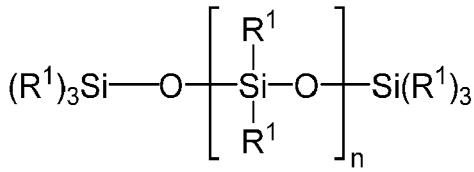

(II)

where

$R^1$ independently stands for

- an alkoxy radical with 1 to 6 carbon atoms, preferably 1 or two carbon atoms, more preferably a methoxy radical
- an $R^3$ as defined above, or
- an $R^4$ as defined above; and

index n is an integer with a value of 1 to 30,
wherein at least one $R^1$ is an $R^3$.

Suitable cyclic oligomers for use as oligomeric aminofunctional alkoxysilanes are shown in formula (III),

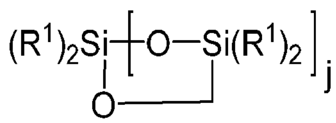

(III)

where

$R^1$ has the same meaning as detailed in formula (II) above and wherein at least one $R^1$ is an $R^3$; and
Index j is an integer with a value of 3 to 30.

Preferred monomeric or oligomeric aminofunctional alkoxysilanes include N-(n-Butyl)-3-aminopropyltrimethoxysilane, 3-aminopropyltrimethoxysilane, 3-aminopropyldimethoxymethyl-silane, N-(2-aminoethyl)-3-aminopropyltrimethoxysilane, N-(2-aminoethyl)-3-aminopropyldimethoxymethylsilane, N-(2-aminoethyl)-N'-[3-(trimethoxysilyl)-propyl] ethylenediamine and oligomers obtained from the condensation of the mentioned aminosilanes, optionally oligomerized together with alkylalkoxysilanes, in particular methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and octyltrimethoxysilane.
Also preferred are monomeric or oligomeric or the analogs thereof with ethoxy in place of methoxy groups.
Most preferred monomeric or oligomeric aminofunctional alkoxysilane include N-(n-butyl)-3-aminopropyltrimethoxysilane and the oligomers obtained from the condensation of N-(n-butyl)-3-aminopropyltrimethoxysilane with alkylalkoxysilanes as mentioned above. These silanes, when used in the compositions according to the present invention, have the advantage that the compositions have a particularly low modulus and high movement capabilities after curing, which makes them especially suitable as adhesive sealants.

Preferably, said monomeric or oligomeric aminofunctional alkoxysilane has a viscosity of between 2 and 40 mPa·s, measured at 20°C according to DIN 53015. This viscosity range enables particularly good adhesion properties.

Many suitable oligomeric aminofunctional alkoxysilanes and the synthetic routes to obtain them can be found in WO 2014/079613.

Most preferred oligomeric aminofunctional alkoxysilane is the oligomer obtained from the condensation of N-(n-butyl)-3-aminopropyltrimethoxysilane.

Preferably, said oligomeric aminofunctional alkoxysilane has a viscosity of between 1500 and 3500 mPa·s, measured at 20°C according to DIN 53015. This viscosity range enables a particularly good miscibility with the organic polymer having hydrolysable silane groups, and particularly good adhesion properties.

In preferred embodiments, said monomeric or oligomeric aminofunctional alkoxysilane comprises secondary amino groups. These embodiments have the advantage that the compositions have a particularly low modulus and high movement capabilities after curing, which makes them especially suitable as elastic adhesive in the method according to the present invention.

Required in the sealant composition **S** to be used in the method according to the present invention are between 10 and 60 wt.-%, preferably between 10 and 50 wt.-%, in particular between 10 and 40 wt.-%, based on sealant composition **S**, of at least organic polymer having hydrolysable silane groups.

In general, it is preferred that the amount of organic polymer having hydrolysable silane groups in the sealant composition S is between 11 and 35 wt.-%, preferably between 12 and 30 wt.-%, in particular between 15 and 25 wt.-%, based on the total sealant composition **S**. This range allows for good mechanical and low hardness properties without making the composition too expensive.

Preferably, the organic polymer having hydrolysable silane groups is a polyurethane, polyolefin, polyester, polycarbonate, polyamide, poly(meth)acrylate or polyether or a mixed form of these polymers, each of which bears one or preferably more than one silane group. The silane groups may be in pendant positions in the chain or in terminal positions and are bonded to the organic polymer via a carbon atom.
More preferably, the organic polymer containing hydrolysable silane groups is a polyolefin containing silane groups or a poly(meth)acrylate containing silane groups or a polyurethane containing silane groups or a polyether containing silane groups or a mixed form of these polymers.
Most preferably, the organic polymer containing hydrolysable silane groups is a polyether containing silane groups or a polyurethane containing silane groups or a poly(meth)acrylate containing silane groups or a mixture of these polymers.

The silane groups present in the organic polymer containing silane groups are preferably alkoxysilane groups, especially alkoxysilane groups of the formula (VI)

$$\begin{array}{c}(R^{15})_x\\ |\\ ---Si—(OR^{14})_{3-x}\end{array} \qquad (VI)$$

where

$R^{14}$ is a linear or branched, monovalent hydrocarbyl radical having 1 to 5 carbon atoms, especially methyl or ethyl or isopropyl;
$R^{15}$ is a linear or branched, monovalent hydrocarbyl radical having 1 to 8 carbon atoms, especially methyl or ethyl; and
x is a value of 0 or 1 or 2, preferably 0 or 1, especially 0.

More preferably $R^{14}$ is methyl or ethyl.
For particular applications, the $R^{14}$ radical is preferably an ethyl group, since, in this case, ecologically and toxicologically harmless ethanol is released in the course of curing of the composition.
Particular preference is given to trimethoxysilane groups, dimethoxymethyl-silane groups or triethoxysilane groups.
In this context, methoxysilane groups have the advantage that they are particularly reactive, and ethoxysilane groups have the advantage that they are toxicologically advantageous and particularly storage stable.

The organic polymer containing hydrolysable silane groups has an average of preferably 1.3 to 4, especially 1.5 to 3, more preferably 1.7 to 2.8, silane groups per molecule. The silane groups are preferably terminal.
The organic polymer containing silane groups preferably has an average molecular weight, determined by means of GPC against a polystyrene standard, in the range from 1’000 to 30’000 g/mol, especially from 2’000 to 20’000 g/mol.
The organic polymer containing silane groups preferably has a silane equivalent weight of 300 to 25’000 g/eq, especially of 500 to 15’000 g/eq.

The organic polymer containing hydrolysable silane groups may be solid or liquid at room temperature. It is preferably liquid at room temperature.

Most preferably, the organic polymer containing hydrolysable silane groups is an organic polymer containing silane groups which is liquid at room temperature, where the silane groups are especially dialkoxysilane groups and/or trialkoxysilane groups, more preferably trimethoxysilane groups or triethoxysilane groups.

Processes for preparing organic polymers containing silane groups are known to the person skilled in the art. In a preferred process, organic polymers containing silane groups are obtainable from the reaction of organic polymers containing allyl groups with hydrosilanes, optionally with chain extension using, for example, diisocyanates.
In a further preferred process, polyethers containing silane groups are obtainable from the copolymerization of alkylene oxides and epoxysilanes, optionally with chain extension using, for example, diisocyanates.
In a further preferred process, organic polymers containing silane groups are obtainable from the reaction of organic polyols with isocyanatosilanes, optionally with chain extension using diisocyanates.
In a further preferred process, polyethers containing silane groups are obtainable from the reaction of organic polymers containing isocyanate groups, especially NCO-terminated urethane polymers from the reaction of polyols with a superstoichiometric amount of polyisocyanates, with aminosilanes, hydroxysilanes or mercaptosilanes. Polyethers containing silane groups from this process are particularly preferred. This process enables the use of a multitude of inexpensive starting materials of good commercial availability, by means of which it is possible to obtain different polymer properties, for example high extensibility, high strength, low modulus of elasticity, low glass transition point or high weathering resistance.

More preferably, the organic polymer containing silane groups is obtainable from the reaction of NCO-terminated urethane polyethers with aminosilanes or hydroxysilanes. Suitable NCO-terminated urethane polymers are obtainable from the reaction of polyols, especially polyether polyols, in particular polyoxyalkylenediols or polyoxyalkylenetriols, preferably polyoxypropylenediols or polyoxypropylenetriols, with a superstoichiometric amount of polyisocyanates, especially diisocyanates. Also other polyols, such as poly(meth)acrylate polyols, polyhydrocarbon polyols, in particular polybutadiene polyols, polyhdroxy functional fats or oils, polycarbonate polyols, polyester polyols and polyhydroxy functional acrylonitrilie/butadiene copolymers are suitable. Furthermore, small amounts of low molecular weight dihydric or polyhydric alcohols, such as diols, glycols, and sugar alcohols may be used as additives.
Preferably, the reaction between the polyisocyanate and the polyol is conducted with exclusion of moisture at a temperature of 50°C to 160°C, optionally in the presence of suitable catalysts, with metered addition of the polyisocyanate in such a way that the isocyanate groups thereof are present in a stoichiometric excess in relation to the hydroxyl groups of the polyol. More particularly, the excess of polyisocyanate is chosen such that a content of free isocyanate groups of 0.1 % to 5% by weight, preferably 0.2% to 4% by weight, more preferably 0.3% to 3% by weight, based on the overall polymer, remains in the resulting urethane polymer after the reaction of all hydroxyl groups.
Preferred diisocyanates are selected from the group consisting of hexamethylene 1,6-diisocyanate (HDI), 1-isocyanato-3,3,5-trimethyl-5-isocyanatomethylcyclohexane (= isophorone diisocyanate or IPDI), tolylene 2,4- and 2,6-diisocyanate and any desired mixtures of these isomers (TDI) and diphenylmethane 4,4'-, 2,4'- and 2,2'-diisocyanate and any desired mixtures of these isomers (MDI). Particular preference is given to IPDI or TDI. Most preferred is IPDI. In this way, polyethers containing silane groups with particularly good lightfastness and oxidation stability are obtained.

Especially suitable as polyether polyols are polyoxyalkylenediols or polyoxyalkylenetriols having a degree of unsaturation lower than 0.02 meq/g, especially lower than 0.01 meq/g, and a mean molecular weight in the range from 400 to 25'000 g/mol, especially 1000 to 20'000 g/mol.
As well as polyether polyols, it is also possible to use portions of other polyols, especially polyacrylate polyols, and low molecular weight diols or triols.

Suitable aminosilanes for the reaction with an NCO-terminated urethane polyether are primary and secondary aminosilanes. Preference is given to 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-butyl-3-aminopropyltrimethoxysilane, N-phenyl-3-aminopropyltrimethoxysilane, adducts formed from primary amino-silanes such as 3-aminopropyltrimethoxysilane, 3-aminopropyldimethoxy-methylsilane or N-(2-aminoethyl)-3-aminopropyltrimethoxysilane and Michael acceptors such as acrylonitrile, (meth)acrylic esters, (meth)acrylamides, maleic or fumaric diesters, citraconic diesters or itaconic diesters, especially dimethyl or diethyl N-(3-trimethoxysilylpropyl)aminosuccinate. Likewise suitable are analogs of the aminosilanes mentioned with ethoxy or isopropoxy groups in place of the methoxy groups on the silicon.

Suitable hydroxysilanes for the reaction with an NCO-terminated urethane polyether are especially obtainable from the addition of aminosilanes onto lactones or onto cyclic carbonates or onto lactides.
Aminosilanes suitable for the purpose are especially 3-aminopropyltrimethoxysilane, 3-aminopropyltriethoxysilane, 4-aminobutyltrimethoxysilane, 4-aminobutyltriethoxysilane, 4-amino-3-methylbutyltrimethoxysilane, 4-amino-3-methylbutyltriethoxysilane, 4-amino-3,3-dimethylbutyltrimethoxysilane, 4-amino-3,3-dimethylbutyltriethoxysilane, 2-aminoethyltrimethoxysilane or 2-aminoethyltriethoxysilane. Particular preference is given to 3-aminopropyltrimethoxysilane, 3-aminopropyltriethoxysilane, 4-amino-3,3-dimethylbutyltrimethoxysilane or 4-amino-3,3-dimethylbutyltriethoxysilane.
Suitable lactones are especially $\gamma$-valerolactone, $\gamma$-octalactone, $\delta$-decalactone, and $\varepsilon$-decalactone, especially $\gamma$-valerol-

actone.
Suitable cyclic carbonates are especially 4,5-dimethyl-1,3-dioxolan-2-one, 4,4-dimethyl-1,3-dioxolan-2-one, 4-ethyl-1,3-dioxolan-2-one, 4-methyl-1,3-dioxolan-2-one or 4-(phenoxymethyl)-1,3-dioxolan-2-one.
Suitable lactides are especially 1,4-dioxane-2,5-dione (lactide formed from 2-hydroxyacetic acid, also called "glycolide"), 3,6-dimethyl-1,4-dioxane-2,5-dione (lactide formed from lactic acid, also called "lactide") and 3,6-diphenyl-1,4-dioxane-2,5-dione (lactide formed from mandelic acid).
Preferred hydroxysilanes which are obtained in this way are N-(3-triethoxysilylpropyl)-2-hydroxypropanamide, N-(3-trimethoxysilylpropyl)-2-hydroxypropanamide, N-(3-triethoxysilylpropyl)-4-hydroxypentanamide, N-(3-triethoxysilylpropyl)-4-hydroxyoctanamide, N-(3-triethoxysilylpropyl)-5-hydroxydecanamide and N-(3-triethoxysilylpropyl)-2-hydroxypropyl carbamate.

In addition, suitable hydroxysilanes are also obtainable from the addition of aminosilanes onto epoxides or from the addition of amines onto epoxysilanes. Preferred hydroxysilanes which are obtained in this way are 2-morpholino-4(5)-(2-trimethoxysilylethyl)cyclohexan-1-ol, 2-morpholino-4(5)-(2-triethoxysilylethyl)cyclohexan-1-ol or 1-morpholino-3-(3-(triethoxysilyl)propoxy)propan-2-ol.

Further suitable polyethers containing silane groups are commercially available products, especially the following: MS Polymer™ (from Kaneka Corp.; especially the S203H, S303H, S227, S810, MA903 and S943 products); MS Polymer™ or Silyl™ (from Kaneka Corp.; especially the SAT010, SAT030, SAT200, SAX350, SAX400, SAX725, MAX602, MAX450, MAX951 products); Excestar® (from Asahi Glass Co. Ltd.; especially the S2410, S2420, S3430, S3630 products); SPUR+* (from Momentive Performance Materials; especially the 1010LM, 1015LM, 1050MM products); Vorasil™ (from Dow Chemical Co.; especially the 602 and 604 products); Desmoseal® (from Bayer MaterialScience AG; especially the S XP 2458, S XP 2636, S XP 2749, S XP 2774 and S XP 2821 products), TEGOPAC® (from Evonik Industries AG; especially the Seal 100, Bond 150, Bond 250 products), Polymer ST (from Hanse Chemie AG/Evonik Industries AG, especially the 47, 48, 61, 61LV, 77, 80, 81 products); Geniosil® STP (from Wacker Chemie AG; especially the E10, E15, E30, E35, WP1, and WP2 products).
Particularly preferred organic polymers containing silane groups have end groups of the formula (VII)

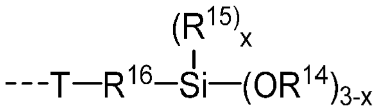

(VII)

where

$R^{16}$ is a linear or branched divalent hydrocarbyl radical which has 1 to 12 carbon atoms and optionally has cyclic and/or aromatic moieties and optionally one or more heteroatoms, especially one or more nitrogen atoms;
T is a divalent radical selected from -O-, -S-, -N($R^{17}$)-, -O-CO-N($R^{17}$)-, -N($R^{17}$)-CO-O- and -N($R^{17}$)-CO-N($R^{17}$)-,

where $R^{17}$ is a hydrogen radical or a linear or branched hydrocarbyl radical
which has 1 to 20 carbon atoms and optionally has cyclic moieties, and which optionally has an alkoxysilane, ether or carboxylic ester group; and

$R^{14}$, $R^{15}$ and x have the definitions already given.

Preferably, $R^{16}$ is 1,3-propylene or 1,4-butylene, where butylene may be substituted by one or two methyl groups.
More preferably, $R^{16}$ is 1,3-propylene.

The sealant composition **S** furthermore optionally but preferably comprises up to 30 wt.-%, in particular between 10 and 30 wt.-%, preferably between 11 and 25 wt.-%, more preferably between 12 and 20 wt.-%, based on the total composition, of at least one plasticizer.
The plasticizer may be any plasticizer commonly used in compositions based on silane-functional organic polymers. Preferred plasticizers include esters, for example phthalates, cyclohexane dicarboxylic acid diesters, and adipates.
Apart from these standard plasticizers, also polymeric plasticizers can be used. The term "polymeric plasticizer" herein means a polymeric additive that is liquid at room temperature and contains no hydrolysable silane groups. In contrast to traditional plasticizers, such as phthalates, the polymeric plasticizers generally have a higher molecular weight.
Preferably, a polymeric plasticizer, if present, has an average molecular weight $M_n$ of 500 to 12'000 g/mol, in particular 1'000 to 10'000 g/mol, more preferably 2'500 to 5'000 g/mol.

Suitable polymeric plasticizers include polyols, such as those suitable for the production of the organic silane-functional polymers mentioned above, as long as they are liquid at room temperature. Preferred polyols suitable as polymeric plasticizers include polyether polyols, polyester polyols, polyhydrocarbon polyols, polybutadiene polyols, and

poly(meth)acrylate polyols. Particularly preferred are polyether polyols, especially those with an average molecular weight of $M_n$ of 500 to 12'000 g/mol, especially 1'000 to 10'000 g/mol, more preferably 2'500 to 5'000 g/mol. Said polymeric plasticizer preferably is a polyether, having end groups independently selected from hydrocarbon, alkoxy, hydroxyl, or amino groups. Most preferred is a polyether polyol, i.e. having hydroxyl end groups. The hydroxyl groups of these polyols may be endcapped, e.g. by acetylation.
Major advantages of using polyether polyols as polymeric plasticizers are an especially fast adhesion build-up and especially good adhesion properties.

Preferred as plasticizers in sealant composition **S** are in particular the aforementioned polymeric plasticizers, as well as reactive plasticizers in the form of mono-silanefunctional organic polymers, i.e. those that are silane-reactive at one end, or organosilanes with a C6-C24 alkyl chain, and carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

Sealant composition **S** further comprises at least one catalyst for the crosslinking of silane groups. Suitable catalysts are especially metal compounds and/or basic nitrogen or phosphorus compounds.

Suitable metal compounds are especially compounds of tin, titanium, zirconium, aluminum or zinc, especially diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(II) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases or preferably amines, hexahydrotriazines, biguanides, guanidines or further amidines.

In addition, sealant composition **S** may comprise, as cocatalyst, an acid, especially a carboxylic acid. Preference is given to aliphatic carboxylic acids such as formic acid, lauric acid, stearic acid, isostearic acid, oleic acid, 2-ethyl-2,5-dimethylcaproic acid, 2-ethylhexanoic acid, neodecanoic acid, fatty acid mixtures from the hydrolysis of natural fats and oils or di- and polycarboxylic acids, especially poly(meth)acrylic acids.

The sealant composition **S** may comprise further constituents, especially the following auxiliaries and additives:

- adhesion promoters and/or crosslinkers, especially further aminosilanes, mercaptosilanes, epoxysilanes, (meth)acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes;
- desiccants or drying agents, especially tetraethoxysilane, vinyltrimethoxysilane, vinyltriethoxysilane or organoalkoxysilanes having a functional group in the $\alpha$ position to the silane group, especially N-(methyldimethoxysilylmethyl)-O-methylcarbamate, (methacryloyloxymethyl)silanes, methoxymethylsilanes, orthoformic esters, calcium oxide or molecular sieves, especially vinyltrimethoxysilane or vinyltriethoxysilane;
- solvents;
- inorganic or organic fillers, especially natural, ground or precipitated calcium carbonates, optionally coated with fatty acids, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed silicas, cellulose ethers or hydrophobically modified polyoxyethylenes;
- stabilizers against oxidation, heat, light or UV radiation;
- natural resins, fats or oils such as rosin, shellac, linseed oil, castor oil or soya oil;
- non-reactive polymers that are preferably solid at room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes, ethylene-vinyl acetate copolymers (EVA) or atactic poly-$\alpha$-olefins (APAO);

- flame-retardant substances, especially the already mentioned fillers aluminum hydroxide and magnesium hydroxide, or, in particular, organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates;
- surface-active substances, especially wetting agents, leveling agents, deaerating agents or defoamers;
- biocides, especially algicides, fungicides or substances that inhibit fungal growth;

and other substances customarily used in curable compositions. It may be advisable to chemically or physically dry certain constituents before mixing them into the composition.

Sealant composition **S** preferably comprises between 0.5 and 2.5 wt.-%, preferably between 1 and 2 wt.-%, based on the total composition, of at least one desiccant or drying agent, most preferably vinyl trimethoxysilane. This range has the advantage that an optimal storage stability and skin formation time can be achieved without rendering the product too stiff and/or brittle after curing.

In a preferred embodiment, the sealant composition **S** comprises at least one desiccant and at least one adhesion promoter and/or crosslinker.

The sealant composition **S** may take the form of a one-component or of a multicomponent, especially two-component, composition.

In the present document, "one-component" refers to a composition in which all constituents of the composition are stored in a mixture in the same container and which is curable with moisture, in particular moisture from air.

In the present document, "two-component" refers to a composition in which the constituents of the composition are present in two different components that are stored in separate containers. Only shortly before or during the application of the composition are the two components mixed with one another, whereupon the mixed composition cures, optionally under the action of moisture.

Thus, in one or more embodiments of the present invention, sealant composition **S** is a one-component composition.

In other embodiments, moisture-curable sealant composition **S** is a two-component composition consisting of two components **S1** and **S2**, wherein the first component **S1** comprises said silane-functional organic polymer and the second component **S2** comprises water.

The composition is preferably a one-component composition, however.

Any second or optionally further components is/are mixed with the first component prior to or on application, especially by means of a static mixer or by means of a dynamic mixer.

The moisture-curable sealant composition **S** is especially applied at ambient temperature, preferably within a temperature range between 0°C and 45°C, especially 5°C to 35°C, and cures under these conditions.

On application, the crosslinking reaction of the silane groups commences, if appropriate under the influence of moisture. Silane groups present can condense with silanol groups present to give siloxane groups (Si-O-Si groups). Silane groups present can also be hydrolyzed on contact with moisture to give silanol groups (Si-OH groups) and form siloxane groups (Si-O-Si groups) through subsequent condensation reactions. As a result of these reactions, the composition ultimately cures.

If water is required for the curing, this can either come from the air (air humidity), or else the composition can be contacted with a water-containing component, for example by painting, for example with a smoothing agent, or by spraying, or water or a water-containing component can be added to the composition on application, for example in the form of a water-containing or water-releasing liquid or paste, as defined above as component **S2**. A paste is especially suitable if the composition itself is in the form of a paste.

In the case of curing by means of air humidity, the composition cures from the outside inward, at first forming a skin on the surface of the composition. What is called the "skin time" or "skin formation time" is a measure of the curing rate of the composition. The speed of curing is generally determined by various factors, for example the availability of water, temperature, etc.

A moisture-curable sealant composition **S** of this kind typically comprises plasticizers, fillers, adhesion promoters and/or crosslinkers and desiccants, and optionally further auxiliaries and additives.

For the intended application as sealant in the inventive method, the moisture-curable sealant composition **S** preferably has a pasty consistency with structurally viscous properties. Such a pasty sealant composition **S** is especially applied to a substrate to be sealed from standard cartridges that are operated manually, by means of compressed air or with a battery, or from a vat or hobbock by means of a delivery pump or an extruder, optionally by means of an application robot. Moisture-curable sealant composition **S** may also have liquid consistency at room temperature with self-leveling properties. It may be slightly thixotropic, such that the coating is applicable to sloping to vertical surfaces without flowing away immediately. In this form, moisture-curable sealant composition **S** is preferably applied by means of a roller or

brush or by pouring-out and distribution by means, for example, of a roller, a scraper or a notched trowel.

Primer composition **P**

The primer composition **P** to be used in the method according to the present invention comprises:

- at least one polyol and at least one polyisocyanate, or a polyurethane reaction product thereof,
- preferably at least one organosilane having hydrolysable alkoxysilane groups and having at least one functional group selected from glycidoxyalkyl, aminoalkyl, isocyanatoalkyl, or mercaptoalkyl groups,
- preferably at least one polyurethane curing catalyst,
- at least one organic solvent;

Suitable polyols to be used in primer composition **P** are in particular polyether polyols, poly(methy)acrylate polyols, polyester polyols and polycarbonate polyols and also mixtures of these polyols.
Preferably, the at least one employed polyol has an average OH functionality of at least 2 and an equivalent weight of not more than 500. The OH functionality of a polyol is to be understood here as meaning the average number of OH groups per polyol molecule. The equivalent weight is defined according to formulae (a) and (b)

$$\text{Equivalent weight} = (56.1 \times 1000) / \text{OH number} \quad (a)$$

$$\text{Equivalent weight} = M_n / \text{OH functionality} \quad (b)$$

wherein the OH number (hydroxyl number) is defined as the amount of potassium hydroxide in milligrams required to neutralize the amount of acetic acid bound upon acetylation of 1 g of polyol and
$M_n$ is the average molecular weight (number-average) of the polyol. Both formulae (a) and (b) allow calculation of the equivalent weight. The required values for calculation are obtainable by experiment ($M_n$, OH number) or are published by the manufacturer of the polyols ($M_n$, OH functionality).

Suitable polyether polyols, also known as polyoxyalkylene polyols or oligoetherols, are in particular those which are polymerization products of ethylene oxide, 1,2-propylene oxide, 1,2- or 2,3-butylene oxide, oxetane, tetrahydrofuran or mixtures thereof, optionally polymerized with the aid of a starter molecule having two or more active hydrogen atoms such as for example water, ammonia or compounds having a plurality of OH or NH groups, for example 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the recited compounds. Employable are both polyoxyalkylene polyols having a low degree of unsaturation (measured according to ASTM D-2849-69 and reported in milliequivalents of unsaturation per gram of polyol (mEq/g)) produced for example using so-called double metal cyanide complex catalysts (DMC catalysts) and polyoxyalkylene polyols having a relatively high degree of unsaturation produced for example using anionic catalysts such as NaOH, KOH, CsOH or alkali metal alkoxides.
Particularly suitable are polyoxyethylene polyols and polyoxypropylene polyols, in particular polyoxyethylene diols, polyoxypropylene diols, polyoxyethylene triols and polyoxypropylene triols.

Also suitable are hydroxyl-terminated polybutadiene polyols, for example those that are produced by polymerization of 1,3-butadiene and allyl alcohol or by oxidation of polybutadiene and also hydrogenation products thereof.
Also suitable are styrene-acrylonitrile-grafted polyether polyols such as are commercially available for example under the trade name Lupranol® from Elastogran GmbH, Germany.

Suitable polyester polyols include in particular polyesters which bear at least two hydroxyl groups and are produced by known processes, in particular polycondensation of hydroxycarboxylic acids or polycondensation of aliphatic and/or aromatic polycarboxylic acids with dihydric or polyhydric alcohols. Especially suitable are polyester polyols produced from divalent to trivalent alcohols such as for example 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane or mixtures of the aforementioned alcohols with organic dicarboxylic acids or the anhydrides or esters thereof such as for example succinic acid, glutaric acid, adipic acid, trimethyladipic acid, suberic acid, azelaic acid, sebacic acid, dodecanedicarboxylic acid, maleic acid, fumaric acid, dimer fatty acid, phthalic acid, phthalic anhydride, isophthalic acid, terephthalic acid, dimethyl terephthalate, hexahydrophthalic acid, trimellitic acid and trimellitic anhydride or mixtures of the aforementioned acids and polyester polyols formed from lactones such as for example ε-caprolactone.

Particularly suitable are polyester diols and triols, in particular those produced from adipic acid, azelaic acid, sebacic acid, dodecanedicarboxylic acid, dimer fatty acid, phthalic acid, isophthalic acid and terephthalic acid as the dicarboxylic acid or from lactones such as for example ε-caprolactone and from ethylene glycol, diethylene glycol, neopentyl glycol, 1,4-butanediol, glycerol, 1,6-hexanediol, dimer fatty acid diol and 1,4-cyclohexanedimethanol as the divalent and/or trivalent alcohol. Examples of suitable polyester polyols are Capa® polyols from Perstorp, in particular Capa® 3031 and Capa® 4101, and also Baycoll® polyols from Covestro, in particular Baycoll® 670. However, care must be taken to ensure that the polyester polyols meet the abovementioned conditions in respect of OH functionality and equivalent weight which is not necessarily the case for the entire product range of the recited manufacturers.

Suitable polycarbonate polyols include in particular those obtainable by reaction for example of the abovementioned alcohols used to construct the polyester polyols with dialkyl carbonates such as dimethyl carbonate, diaryl carbonates such as diphenyl carbonate or phosgene. Likewise suitable are polycarbonates obtainable from the copolymerization of $CO_2$ with epoxides such as ethylene oxide and propylene oxide. Polycarbonate diols, in particular amorphous polycarbonate diols, are particularly suitable.

Suitable polycarbonate polyols include for example Kuraray® polyols from Kuraray, in particular Kuraray® C590, and Desmophen® polyols from Covestro, in particular Desmophen® C1100. However, care must be taken to ensure that the polycarbonate polyols meet the abovementioned conditions in respect of OH functionality and equivalent weight which is not necessarily the case for the entire product range of the recited manufacturers.

Further suitable polyols are poly(meth)acrylate polyols.

Also suitable are polyhydroxy-functional fats and oils, for example natural fats and oils, in particular castor oil, or so-called oleochemical polyols obtained by chemical modification of natural fats and oils, the epoxy polyesters or epoxy polyethers obtained for example by epoxidation of unsaturated oils and subsequent ring opening with carboxylic acids or alcohols, respectively, or polyols obtained by hydroformylation and hydrogenation of unsaturated oils. Also suitable are polyols obtained from natural fats and oils by degradation processes such as alcoholysis or ozonolysis and subsequent chemical linking, for example by transesterification or dimerization, of the thus obtained degradation products or derivatives thereof. Suitable degradation products of natural fats and oils are especially fatty acids and fatty alcohols and also fatty acid esters, especially the methyl esters (FAME), which can be derivatized to hydroxy fatty acid esters by hydroformylation and hydrogenation for example.

Likewise suitable in addition are polyhydrocarbon polyols, also known as oligohydrocarbonols, for example polyhydroxy-functional ethylene-propylene, ethylene-butylene or ethylene-propylene-diene copolymers, such as are produced for example by Kraton Polymers, USA, or polyhydroxy-functional copolymers of dienes such as 1,3-butanediene or diene mixtures and vinyl monomers such as styrene, acrylonitrile or isobutylene, or polyhydroxyfunctional polybutadiene polyols, for example those that are produced by copolymerization of 1,3-butadiene and allyl alcohol and may also be hydrogenated.

Also suitable are polyhydroxy-functional acrylonitrile/butadiene copolymers, such as may be produced for example from epoxides or amino alcohols and carboxyl-terminated acrylonitrile/butadiene copolymers which are available commercially under the name Hypro® (formerly Hycar®) CTBN from Emerald Performance Materials, LLC, USA.

All recited polyols preferably have an average molecular weight of 200 to 5000 g/mol, in particular from 250 to 2500 g/mol, preferably from 300 to 2000 g/mol, and preferably an average OH functionality in the range from 2 to 4.

Particularly suitable polyols are polyester polyols, polycarbonate polyols and poly(meth)acrylate polyols. These polyols allow a particularly good adhesion promotion action.

Suitable as polyisocyanates for primer composition **P** are all commercially available aliphatic or aromatic polyisocyanates, especially diisocyanates and triisocyanates, as well as oligomeric and polymeric forms of these polyisocyanates, can be used as polyisocyanates.

For example, suitable are commercially available aromatic, aliphatic or cycloaliphatic diisocyanates, in particular 4,4'-diphenylmethane diisocyanate, if necessary with amounts of 2,4'- and/or 2,2'-diphenylmethane diisocyanate (MDI), 2,4-toluene diisocyanate or mixtures thereof with 2,6-toluene diisocyanate (TDI), 1,4-phenylene diisocyanate (PDI), naphthalene-1, 5-diisocyanate (NDI), 1,6-hexane diisocyanate (HDI), 2,2(4),4-trimethyl-1,6-hexamethylene diisocyanate (TMDI), cyclohexane 1,3- or -1,4-diisocyanate, 1-isocyanato-3,3,5-trimethyl-5-isocya¬natomethylcyclohexane (isophorone diisocyanate or IPDI), Perhydro-2,4'- or -4,4'-diphenylmethane diisocyanate (HMDI), 1,3- or 1,4-bis(isocyanatomethyl)-cyclohexane, m- or p-xylylene diisocyanate (XDI), or mixtures thereof.

MDI, TDI, HDI or IPDI is preferred. MDI is particularly preferred, especially 4,4'-diphenylmethane diisocyanate (4,4'-MDI). In particular, 4,4'-MDI is of a quality that contains only small amounts of 2,4'- and/or 2,2'-diphenylmethane diisocyanate and is solid at room temperature.

Suitable diisocyanate oligomers as polyisocyanate in primer **P** are in particular HDI biurets such as Desmodur® N 100 or N 3200 (from Covestro AG), Tolonate® HDB or HDB-LV (from Vencorex) or Duranate® 24A-100 (from Asahi Kasei); HDI isocyanurates such as Desmodur® N 3300, N 3600 or N 3790 BA (all from Covestro), Tolonate® HDT, HDT-LV or HDT-LV2 (from Vencorex), Duranate® TPA-100 or THA-100 (from Asahi Kasei) or Coronate® HX (from Tosoh Corp.); HDI uretdiones such as Desmodur® N 3400 (from Covestro); HDI iminooxadiazinediones such as Desmodur®

XP 2410 (from Covestro); HDI allophanates such as Desmodur® VP LS 2102 (from Covestro); IPDI isocyanurates such as Desmodur® Z 4470 (from Covestro) in solution or in solid form as Vestanat® T1890/ 100 (from Evonik Industries); TDI oligomers such as Desmodur® IL (from Covestro); or mixed isocyanurates based on TDI/HDI such as Desmodur® HL (from Covestro)

Also suitable as polyisocyanate in primer **P** are triisocyanates, especially methylidyntri-p-phenylene triisocyanate (triphenylmethane triisocyanate, for example Desmodur® RE), trimers of HDI (for example Desmodur® N-3300 and N-3390), trimers of IPDI, for example Desmodur® Z4470BA, and tris(p-isocyanatophenyl) thiophosphate (for example Desmodur® RFE). Most preferred are trimers of IPDI.

Preferred suitable diisocyanates include for example 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (= isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, oligomers and polymers of the recited isocyanates and any desired mixtures of the recited isocyanates.

Polyols and polyisocyanates contained in primer composition **P** may be partially or fully reacted, thus forming a polyurethane prepolymer with isocyanate functionality. It is important that the molar amount of isocyanate groups within primer composition **P** is in molar excess compared to the hydroxyl groups of the contained polyols when formulating the composition. In preferred embodiments, additional polyisocyanates are added after an optional pre-reaction of polyols and polyisocyanates in order to ensure a sufficiently high and stable isocyanate content within the composition of primer **P.** These additional polyisocyanates may be different from the initially added polyisocyanates.

Primer composition **P** additionally contains at least one organic solvent.

Suitable organic solvents include all solvents capable of sufficiently dissolving or at least dispersing the constituents of the primer composition for a stable solution or dispersion to be formed. Furthermore, the solvents shall not contain any functional groups reactive with isocyanates or alkoxysilanes such as hydroxyl groups. Alcohols are thus not suitable, for example.

It may be advantageous if the organic solvents have a comparatively high volatility, i.e. a comparatively low boiling point and/or vapor pressure, in order that a rapid evaporation or volatilization of the solvent takes place after use of the primer according to the invention. However, it is also possible for low-volatility or high-boiling solvents to be used, though these then need to be removed with a "wipe-off" method (wiping or aspirating the solvent after curing of the binder on the substrate).

It is generally preferable not to use solvents that are toxicologically very concerning or very highly flammable. In these cases, the user must ensure that Occupational Health & Safety is adequately safeguarded, for example through adequate ventilation, personal protective equipment or equipment for avoiding static discharge.

Suitable and preferred organic solvents are for example esters of linear or branched C1 to C6 carboxylic acids, in particular mono- or diacids esterified with fatty alcohols or linear or branched glycol esters and also esters of low molecular weight alcohols, in particular C1- to C6-alcohols esterified with fatty acids and cyclic forms of such esters. Examples thereof are methyl laurate, ethyl laurate, methyl myristate and lauryl acetate.

Suitable solvents include in particular ethers, ketones, esters or hydrocarbons, preferably diethyl ether, tetrahydrofuran, methyl ethyl ketone, acetone, xylene, toluene or acetates, in particular methyl acetate, ethyl acetate, butyl acetate, methoxybutyl acetate or methoxypropyl acetate.

It is quite possible and may even be advantageous to use a mixture of different solvents.

Especially suitable esters likewise include esters of carbonic acid or monocarboxylic acids or polycarboxylic acids. Suitable esters of carbonic acid include in particular dialkyl carbonates.

Likewise suitable are esters of carboxylic acids with polyethylene glycols or polypropylene glycols.

Likewise suitable esters are organic phosphonates and phosphates.

Also suitable are cyclic esters, i.e. lactones.

Suitable organic solvents furthermore include linear or branched ether compounds having one or two ether functions that bridge C2 to C12 alkyl radicals.

Suitable ethers also include in particular alkoxy-terminated polyols, in particular alkoxy-terminated polyoxyalkylene polyols and also alkoxy-terminated polyether polyols. Examples thereof are polypropylene glycol dialkyl ethers or polyethylene glycol dialkyl ethers. Examples thereof are tetraglyme (tetraethylene glycol dimethyl ether), pentaglyme (pentaethylene glycol dimethyl ether), hexaglyme (hexaethylene glycol dimethyl ether), polyethylene glycol dimethyl ether, such as are commercially available for example from Clariant under the name Polyglykol DME 200 or Polyglykol DME 250, diethylene glycol dibutyl ether, polypropylene glycol dimethyl ether, polypropylene glycol dibutyl ether, polyethylene glycol monomethyl ether monoacetate and polypropylene glycol monomethyl ether monoacetate. Compared to the corresponding polyethylene glycol diethers, polypropylene glycol diethers have the advantage that they typically have better dissolution characteristics and are still liquid at higher molecular weights.

One further advantageous solvent is PCBTF, which is nonflammable and a good surface cleaning solvent. PCBTF is also widely known as effective coating diluent as well as a useful drying time retarder. Firestone Corp reports higher open times with PCBTF than traditional solvents. In fact, PCBTF is known as a very good solvent for a variety of polymers. Perchloroethylene is also a suitable solvent with excellent cleaning properties and does not appreciably dissolve most polymers, which has also found utility in this area. Ethyl lactate and d-limonene are both known as excellent solvents for coatings as well as effective cleaning agents and are also suitable.

Primer composition **P** furthermore preferably comprises at least one organosilane having hydrolysable alkoxysilane groups and having at least one functional group selected from glycidoxyalkyl, isocyanatoalkyl, aminoalkyl, or mercaptoalkyl groups. The organosilane is not necessarily required for the primer composition **P** to work as intended according to the invention. However, addition of one or more organosilanes may improve adhesion on certain substrates.

Suitable as aminofunctional such organosilanes are all aminofunctional silanes described above for sealant composition **S.**

Furthermore suitable are mercaptosilanes, such as 3-mercaptopropyltrimethoxysilane and 3-mercaptopropyltriethoxysilane.

Also suitable are glycidoxyalkyl-functional organosilanes, such as, 3-glycidoxypropyltrimethoxysilane, or 3-glycidoxypropyltriethoxysilane.

Also suitable are isocyanatoalkyl-functional organosilanes, such as, 3-isocyanatopropyltrimethoxysilane, or 3-isocyanatopropyltriethoxysilane.

Preferred organosilanes in primer composition **P** are 3-glycidoxypropyltrimethoxysilane or 3-glycidoxypropyltriethoxysilane, in particular 3-glycidoxypropyl-trimethoxysilane.

Lastly, said primer composition **P** preferably comprises at least one polyurethane curing catalyst.
Primer composition **P** cures without inclusion of a polyurethane catalyst and the invention works in such a way, especially when curing time of the primer is not a critical issue. However, it is preferred to include a polyurethane catalyst simply in primer composition **P** for ensuring a fast curing of the primer layer before sealant composition **S** is applied thereon. Without a catalyst in the primer, the curing time required before sealant composition **S** can be applied thereon normally extends by a factor of about 5 to 10, compared to a primer composition **P** containing catalyst.

Suitable as polyurethane curing catalyst are all commonly used polyurethane curing catalysts, such as the tin catalysts also suitable for silane curing and described above for sealant composition **S**.
Furthermore suitable are, for example, bismuth catalysts and organic curing catalysts such as dimorpholino diethyl ether (DMDEE).

An especially preferred primer composition **P** to be used in the present method comprises:

- between 30 and 70 wt.-%, based on the primer composition **P,** of a reaction product of a first polyisocyanate with a polyol,
- between 10 and 30 wt.-%, based on the primer composition **P,** of a second polyisocyanate,
- preferably between 0.1 and 2.0 wt.-%, based on the primer composition **P,** of at least one organosilane having hydrolysable alkoxysilane groups and having at least one functional group selected from glycidoxyalkyl, isocyanatoalkyl, aminoalkyl, or mercaptoalkyl groups,
- preferably between 0.01 and 1.0 wt.-%, based on the primer composition **P,** of a polyurethane curing catalyst.

In preferred embodiments of this composition, said first polyisocyanate is selected from isophorone diisocyanate, toluene diisocyanate, monomeric methylene diphenyl diisocyanate, and polymeric diphenyl diisocyanate, and said second polyisocyanate is selected from hexamethylene diisocyanate trimer and isophorone diisocyanate trimer, and/or said primer composition **P** comprises at least one organosilane having hydrolysable alkoxysilane groups and having a glycidoxyalkyl group.

<u>The method</u>

The subject of the present invention is a method for adhesively sealing a joint or a surface in or on a building structure that is in contact with chlorinated water, comprising the steps:

a) applying the primer composition **P** as described above onto the surface or into the joint to be sealed;
b) waiting for primer composition **P** to be cured;
c) applying a moisture-curable sealant composition **S** as described above onto the cured primer composition **P,** thus sealing the joint or the surface; and
d) curing the moisture-curable sealant composition **S** by means of moisture;

Preferably, the waiting time in step b) is between 3h and 24h. If the time is too short (1h or less), the adhesion

properties will be negatively affected. The same is true if the waiting time is too long (more than 36h). Preferably, the waiting time is between 3 and 9 h.

Preferably, the curing time in step d) is at least 24h while the moisture-curable sealant **S** is cured by atmospheric moisture. This ensures an optimal adhesion on the primered substrate.

Preferably, said moisture-curable sealant **S** after curing has a Shore A hardness of between 20 and 40. This can be adjusted by the skilled person using routine formulation techniques (e.g. by adjusting type and amount of organic polymer and plasticizer amounts). Within this Shore A hardness range, the best adhesion properties and sealant stability are obtained.

Preferably, said joint or surface after curing of said moisture-curable sealant **S** is at least partially and/or temporarily in contact with water that has a hypochlorite content of at least 30 ppm. This is readily achieved in swimming pools and other chlorinated water containers.

Another aspect of the present invention is a Kit-of-parts for adhesively sealing a joint or a surface in or on a building structure that is in contact with chlorinated water, comprising:

i) a moisture-curable sealant composition **S** comprising:

- between 10 and 60 wt.-%, based on the total composition **S,** of at least one organic polymer having hydrolysable silane groups,
- optionally up to 30 wt.-%, based on the total composition, of at least one plasticizer,
- optionally between 0.1 and 5 wt.-%, based on the total composition, of at least one monomeric or oligomeric amino-functional alkoxysilane,
- at least one silane curing catalyst; and

ii) a primer composition **P** comprising:

- between 30 and 70 wt.-%, based on the primer composition **P,** of a reaction product of a first polyisocyanate with a polyol,
- between 10 and 30 wt.-%, based on the primer composition **P,** of a second polyisocyanate,
- preferably between 0.1 and 2.0 wt.-%, based on the primer composition **P,** of at least one organosilane having hydrolysable alkoxysilane groups and having at least one functional group selected from glycidoxyalkyl, isocyanatoalkyl, aminoalkyl, or mercaptoalkyl groups,
- preferably between 0.01 and 1.0 wt.-%, based on the primer composition **P,** of a polyurethane curing catalyst.

In preferred embodiments of said kit-of-parts, said first polyisocyanate is selected from isophorone diisocyanate, toluene diisocyanate, monomeric methylene diphenyl diisocyanate, and polymeric diphenyl diisocyanate, and said second polyisocyanate is selected from hexamethylene diisocyanate trimer and isophorone diisocyanate trimer, especially isophorone diisocyanate trimer, and said primer composition **P** comprises at least one organosilane having hydrolysable alkoxysilane groups and having a glycidoxyalkyl group.

In the same or other preferred embodiments of said kit-of-parts, said organic polymer having hydrolysable silane groups comprises or consists of a polyurethane polymer **PU** that is prepared by reacting a molar excess of an aliphatic diisocyanate with a polyether polyol to yield an isocyanate-functional polyurethane polymer, said isocyanate-functional polyurethane polymer subsequently being endcapped with a silane endcapper having two or three alkoxysilane groups and a non-hydrolysable group containing either a secondary amino group or a mercapto group or a hydroxyl group.

All preferred embodiments, restrictions and advantages apply in the same manner for the kit-of-parts described above as they apply for the method according to the present invention and detailed in the description.

## Examples

Adduced hereinafter are working examples which are intended to elucidate the invention described in detail. It will be appreciated that the invention is not restricted to these described working examples. "Standard climatic conditions" refer to a temperature of 23±1 °C and a relative air humidity of 50±5%.

Used primer compositions

The following primer composition was used for the test protocol.

Primer P-1 (primer composition **P** according to invention)

This one-component primer composition contains 50 wt.-%, based on the total primer composition, of a reaction product of polymeric diphenylmethane diisocyanate (Mondur® MR-5, Covestro) and a polypropylene glycol diol having a $M_n$ of approximately 4000 g/mol (Acclaim® 4200, Covestro), employed in a weight ratio of 1 : 1.1 (polyisocyanate : polyol). Furthermore, this composition contains 17.6 wt.-% of an isophorone diisocyanate (IPDI) trimer (Desmodur® Z 4470, Covestro), 0.21 wt.-% deofamer (Tego® Airex 944, Evonik), and 0.21 wt.-% of a polyurethane curing catalyst (2,2'-dimorpholinoldiethyl ether), as well as an organic solvent (xylene).

Preparation of example moisture-curable sealant composition **S** (S-1)

An example substrates moisture-curable sealant composition S-1 was prepared containing the ingredients listed in Table 1.

**Table 1.** Materials used for preparing the sample sealant S-1. Amounts based on total sealant composition S-1.

| Material | Type / description | Amount (wt.-%) |
|---|---|---|
| Polymer PU-1 | Polymer **PU** (based on polyether-polyurethane), preparation detailed below | 22 |
| Plasticizer | Diisodecylphthalate (DIDP) | 17 |
| Stabilizers | UV and oxidation stabilizers | 1 |
| VTMO | Drying agent (Vinyltrimethoxysilane) | 0.66 |
| Silane | N-(n-butyl)-3-aminopropyltrimethoxysilane | 0.9 |
| Silane | N(beta-aminoethyl) gamma-aminopropyltrimethoxysilane | 0.1 |
| Thixotropy additive | Modified castor oil | 3.9 |
| Chalk filler | Dried $CaCO_3$ filler | 52.1 |
| $TiO_2$ | White pigment | 2.3 |
| Catalyst | Dibutyltin dilaurate | 0.04 |

Preparation of a silane-endcapped polyurethane polymer **PU** (Polymer PU-1)

With exclusion of moisture, 1000 g of Acclaim® 12200 polyol (polyoxypropylenediol having a low level of unsaturation, from Covestro; OH number 11.0 mg KOH/g), 35.2 g of isophorone diisocyanate (IPDI; Vestanat® IPDI, from Evonik), 122.5 g of diisodecyl phthalate (DIDP) and 0.12 g dibutyl tin dilaurate (DBTDL) were heated up to 90°C while stirring constantly and left at this temperature until the content of free isocyanate groups determined by titrimetry had reached a stable value of 0.39% by weight. Subsequently, 36.9 g of diethyl N-(3-trimethoxysilylpropyl)-aminosuccinate (adduct formed from 3-aminopropyltrimethoxysilane and diethyl maleate; prepared according to the details in US 5,364,955) were mixed in and the mixture was stirred at 90°C until it was no longer possible to detect any free isocyanate by means of FT-IR spectroscopy. The polyether-based polyurethane polymer endcapped by trimethoxysilane groups thus obtained was cooled down to room temperature and stored with exclusion of moisture.

For preparing the example sealant composition S-1 as detailed in Table 1, the polymer **PU,** the plasticizer, drying agent, the stabilizers and the thixotropy additive were thoroughly mixed for 5 minutes. Subsequently, the dried chalk filler and $TiO_2$ were added with kneading during 15 minutes at 60°C. With the heater switched off, silanes and catalyst were added, and the composition was subsequently processed to a homogeneous paste during 10 minutes under vacuum. Said paste was subsequently filled into internally coated aluminum spreading piston cartridges, which were closed air-tight and stored under standard climate conditions for at least 24 h until the testing protocol was employed.

Sealant S-2

Additionally, a commercial sealant for swimming pools, based on MS-Polymer (silane-functional, moisture-curing polyether polymers endcapped by hydrosilylation) was used as moisture-curable sealant S-2. This sealant is available under the trade name "Underwater Magic™ adhesive & sealant" by Profi-Glue Ltd., Cyprus.

Test protocol

The sample adhesion was tested on clean, dry concrete plates. In experiments where a primer was used, the application of the primer was done using a 1-inch painter brush, applying the primer over the concrete substrate. The primer was then allowed to dry for 3 hours in a climate chamber (ambient temperature of 20-23°C, 50% relative humidity). After 3 hours, the sealant was applied as a bead, over the primed surface. In cases where no primer was used, the sealant was applied directly onto the concrete surface. Sealant application was performed by applying a sealant bead onto the substrate using a caulk gun at an angle of approximately 45° to obtain a uniform bead approximately 12 - 15 mm wide, 5 cm long, and with a 5 mm height. The test sample was then placed in the climate chamber (ambient temperature of 20-23°C, 50% relative humidity). and the bead was allowed to cure for the specified amount of time (1 to 9 days, as specified in Tables 2 and 3).
After this, the concrete plate with the cured sealant bead was placed into a plastic container containing water with a concentration of 250 ppm of sodium hypochlorite and a pH, adjusted by hydrochloric acid, of between 6.5 and 7.5, such that the concrete plate was fully immersed in the chlorinated water. The container was closed using a lid and the immersed samples were kept therein during the time specified in Tables 2 and 3.
After this, the samples were taken out and assessed regarding adhesion and sealant deterioration.
**Deterioration** was evaluated by eye and by touch. Deterioration was confirmed when the sealant started to be gummy, released small particles and/or had partially peeled off the substrate.
**Sealant adhesion** was evaluated as follows:
Using a safety knife, the bead was cut through at either end just a touch above the bonding area and peeled off an inch from the edge to create a flap. A pull stress was applied on the bond line by pulling the flap away from the substrate.
The resulting adhesion failure pattern was analyzed in terms of cohesive and adhesive failure. A fully cohesive failure was rated "++", a partially cohesive failure was rated "+", and a fully adhesive failure (with no cohesive failure) was rated "

Test results

The results of the above test protocol are shown in Tables 2 and 3.

**Table 2.** Adhesion test results on sealant samples applied on concrete substrates and immersed in water with 250 ppm hypochlorite.

| Sealant | Primer (waiting time) | Sealant curing time [days] | Adhesion quality on immersed concrete substrate | | | | | |
|---|---|---|---|---|---|---|---|---|
| | | | Day 1 | Day 2 | Day 4 | Day 7 | Day 14 | Day 21 |
| S-1 | P-1 (3h) | 1 | ++ | ++ | ++ | ++ | ++ | ++ |
| | | 3 | ++ | ++ | ++ | ++ | ++ | ++ |
| | | 9 | ++ | ++ | ++ | ++ | ++ | ++ |
| S-2 | P-1 (3h) | 1 | + | + | + | 0 | 0 | 0 |
| | | 3 | ++ | ++ | ++ | ++ | ++ | ++ |
| | | 9 | ++ | ++ | ++ | ++ | ++ | ++ |
| S-2 | No primer | 1 | 0 | 0 | 0 | 0 | 0 | 0 |
| | | 3 | 0 | 0 | 0 | 0 | 0 | 0 |
| | | 9 | 0 | 0 | 0 | 0 | 0 | 0 |

**Table 3.** Adhesion and sealant deterioration test results on sealant samples applied on concrete substrates and immersed in water with 250 ppm hypochlorite.

| **Sealant** | **Primer** (waiting time 3h) | **Sealant curing time [days]** | **Adhesion after 100 d immersion in chlorinated water** | **Sealant stability after 100 d immersion in chlorinated water** |
|---|---|---|---|---|
| S-1 | P-1 | 1 | Slight adhesion loss | No deterioration |
| | | 3 | Full adhesion | No deterioration |
| | | 9 | Full adhesion | No deterioration |
| S-2 | P-1 | 1 | Full adhesion loss after 7d | Complete sealant deterioration after 100d |
| | | 3 | Full adhesion loss after 72d | Sealant shows partial deterioration after 100d |
| | | 9 | Full adhesion loss after 58d | Sealant shows initial deterioration after 100d |
| S-2 | none | 1 | No adhesion | n/a |
| | | 3 | No adhesion | n/a |
| | | 9 | No adhesion | n/a |

## Claims

1. A method for adhesively sealing a joint or a surface in or on a building structure that is in contact with chlorinated water, comprising the steps:

   a) applying a primer composition **P** onto the surface or into the joint to be sealed;
   b) waiting for primer composition **P** to be cured;
   c) applying a moisture-curable sealant composition **S** onto the cured primer composition P, thus sealing the joint or the surface; and
   d) curing the moisture-curable sealant composition **S** by means of moisture;
   wherein
   said primer composition **P** comprises:

   - at least one polyol and at least one polyisocyanate, or a polyurethane reaction product thereof,
   - preferably at least one organosilane having hydrolysable alkoxysilane groups and having at least one functional group selected from glycidoxyalkyl, aminoalkyl, isocyanatoalkyl, or mercaptoalkyl groups,
   - preferably at least one polyurethane curing catalyst,
   - at least one organic solvent;

   and wherein
   said moisture-curable sealant composition **S** comprises:

   - between 10 and 60 wt.-%, based on the total composition **S,** of at least one organic polymer having hydrolysable silane groups,
   - optionally up to 30 wt.-%, based on the total composition, of at least one plasticizer,
   - optionally between 0.1 and 5 wt.-%, based on the total composition, of at least one monomeric or oligomeric amino-functional alkoxysilane,
   - at least one silane curing catalyst.

2. The method according to claim 1, wherein said organic polymer having silane groups comprises or consists of a polyurethane polymer **PU** endcapped by hydrolysable silane groups, which is prepared by reacting a molar excess of a diisocyanate with a polyol to yield an isocyanate-functional polyurethane polymer, said isocyanate-functional polyurethane polymer subsequently being endcapped with a silane endcapper having two or three alkoxysilane groups and a non-hydrolysable group containing either a secondary amino group or a mercapto group or a hydroxyl

group.

**3.** The method according to claim 2, wherein said diisocyanate is an aliphatic diisocyanate and wherein said polyol is a polyether polyol.

**4.** The method according to claim 3, wherein said aliphatic diisocyanate is isophorone diisocyanate, said polyether polyol is a polyether diol, and said silane endcapper has three hydrolysable alkoxysilane groups and one secondary amino group or a hydroxyl group.

**5.** The method according to anyone of claims 1 to 4, wherein said primer composition **P** comprises between 30 and 70 wt.-%, based on the primer composition **P,** of a reaction product of a first polyisocyanate with said polyol, and between 10 and 30 wt.-%, based on the primer composition **P,** of a second polyisocyanate, and between 0.1 and 2.0 wt.-%, based on the primer composition **P,** of said at least one organosilane, and between 0.01 and 1.0 wt.-%, based on the primer composition **P,** of said curing catalyst.

**6.** The method according to anyone of claim 5, wherein said first polyisocyanate is selected from isophorone diisocyanate, toluene diisocyanate, monomeric methylene diphenyl diisocyanate, and polymeric diphenyl diisocyanate, and wherein said second polyisocyanate is selected from hexamethylene diisocyanate trimer and isophorone diisocyanate trimer.

**7.** The method according to anyone of claims 1 to 6, wherein said organosilane comprised in said primer composition **P** comprises or consists of at least one organosilane having hydrolysable alkoxysilane groups and having a glycidoxyalkyl group.

**8.** The method according to anyone of claims 1 to 7, wherein the waiting time in step b) is between 3h and 24h.

**9.** The method according to anyone of claims 1 to 8, wherein the curing time in step d) is at least 24h while the moisture-curable sealant **S** is cured by atmospheric moisture.

**10.** The method according to anyone of claims 1 to 9, wherein said moisture-curable sealant **S** after curing has a Shore A hardness of between 20 and 40.

**11.** The method according to anyone of claims 1 to 10, wherein said joint or surface after curing of said moisture-curable sealant **S** is at least partially and/or temporarily in contact with water that has a hypochlorite and/or hypochlorous acid content of at least 1 ppm.

**12.** The method according to anyone of claims 1 to 11, wherein said building structure is a swimming pool or parts thereof, and wherein said surface or joint to be sealed is at least partially made of glass, glass ceramic, concrete, mortar, brick, tile, gypsum, natural stone, limestone, granite, marble, metals and alloys, wood, wood-resin composites, resin-glass- or carbon-fiber composites, epoxy coatings, polyurethane coatings, paint, and/or polyvinyl chloride (PVC).

**13.** Kit-of-parts for adhesively sealing a joint or a surface in or on a building structure that is in contact with chlorinated water, comprising:

i) a moisture-curable sealant composition **S** comprising:

- between 10 and 60 wt.-%, based on the total composition **S,** of at least one organic polymer having hydrolysable silane groups,
- optionally up to 30 wt.-%, based on the total composition, of at least one plasticizer,
- optionally between 0.1 and 5 wt.-%, based on the total composition, of at least one monomeric or oligomeric amino-functional alkoxysilane,
- at least one silane curing catalyst; and

ii) a primer composition **P** comprising:

- between 30 and 70 wt.-%, based on the primer composition **P,** of a reaction product of a first polyisocyanate with a polyol,

- between 10 and 30 wt.-%, based on the primer composition **P,** of a second polyisocyanate,
- preferably between 0.1 and 2.0 wt.-%, based on the primer composition **P,** of at least one organosilane having hydrolysable alkoxysilane groups and having at least one functional group selected from glycidoxyalkyl, isocyanatoalkyl, aminoalkyl, or mercaptoalkyl groups,
- preferably between 0.01 and 1.0 wt.-%, based on the primer composition **P,** of a polyurethane curing catalyst.

**14.** The kit-of-parts as claimed in claim 13, wherein said first polyisocyanate is selected from isophorone diisocyanate, toluene diisocyanate, monomeric methylene diphenyl diisocyanate, and polymeric diphenyl diisocyanate, and wherein said second polyisocyanate is selected from hexamethylene diisocyanate trimer and isophorone diisocyanate trimer, and wherein said primer composition **P** comprises at least one organosilane having hydrolysable alkoxysilane groups and having a glycidoxyalkyl group.

**15.** The kit-of-parts as claimed in anyone of claims 13 or 14, wherein said organic polymer having hydrolysable silane groups comprises or consists of a polyurethane polymer **PU** that is prepared by reacting a molar excess of an aliphatic diisocyanate with a polyether polyol to yield an isocyanate-functional polyurethane polymer, said isocyanate-functional polyurethane polymer subsequently being endcapped with a silane endcapper having two or three alkoxysilane groups and a non-hydrolysable group containing either a secondary amino group or a mercapto group or a hydroxyl group.

European Patent Office

# EUROPEAN SEARCH REPORT

Application Number
EP 21 16 9719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ES 2 356 443 A1 (ESCANEZ AMATE JUAN MANUEL [ES]) 8 April 2011 (2011-04-08)<br>* claim 1; figures 1,2 *<br>----- | 1-15 | INV.<br>C08G18/48<br>C08G18/72<br>C08G18/75<br>C08G18/76<br>C08G18/79<br>C08G18/10<br>C09K3/10<br>E04H4/14<br>C08L101/10<br>C04B41/52 |
| A | Profi-Glue: "Safety Data Sheet acc. to OSHA HCS Profi-Glue Limited Safety Data Sheet acc. to OSHA HCS Trade name: Underwater Magic / Underwater Magic adhesive and sealant",<br>,<br>25 July 2016 (2016-07-25), XP055839559,<br>Retrieved from the Internet:<br>URL:https://cdn.lesliespool.com/wpdf/MSDSUWMLargeTube2016OSHA.PDF<br>[retrieved on 2021-09-09]<br>* paragraph [0015] *<br>----- | 1-15 | |
| A | US 5 356 504 A (MAURICE AURELE E [US]) 18 October 1994 (1994-10-18)<br>* column 5, lines 58-60; claim 1 *<br>----- | 1-15 | |
| | | | TECHNICAL FIELDS SEARCHED (IPC) |
| A | JP H07 11198 A (KANEGAFUCHI CHEMICAL IND) 13 January 1995 (1995-01-13)<br>* paragraphs [0032] - [0037], [0040] *<br>----- | 1-15 | C08G<br>G02F<br>E04H<br>C09K<br>C09J<br>C08L<br>C04B |

The present search report has been drawn up for all claims

1

| Place of search | Date of completion of the search | Examiner |
|---|---|---|
| Munich | 16 September 2021 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 16 9719

This annex lists the patent family members relating to the patent documents cited in the above-mentioned European search report. The members are as contained in the European Patent Office EDP file on
The European Patent Office is in no way liable for these particulars which are merely given for the purpose of information.

16-09-2021

| Patent document cited in search report | | Publication date | Patent family member(s) | Publication date |
|---|---|---|---|---|
| ES 2356443 | A1 | 08-04-2011 | NONE | |
| US 5356504 | A | 18-10-1994 | NONE | |
| JP H0711198 | A | 13-01-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014079613 A
- US 5364955 A